# EUROPÄISCHE PATENTSCHRIFT

(11) **EP 0 853 267 B1**
(45) Veröffentlichungstag und Bekanntmachung des Hinweises auf die Patenterteilung: **19.12.2001**
(21) Anmeldenummer: 97114044.7
(22) Anmeldetag: 14.08.1997
(51) Int. Cl.: G05D 23/13, H05B 3/04, H05B 3/50, H01R 13/52, F01P 7/16, H01R 13/405

(54) **Thermostatisches Ventil**
Thermostatic valve
Vanne thermostatique

(30) Priorität: 11.01.1997 DE 19700722
(43) Veröffentlichungstag der Anmeldung: 15.07.1998
(73) Patentinhaber: Gustav Wahler GmbH u. Co, 73730 Esslingen (DE)
(72) Erfinder: Wahler, Hans, 73728 Esslingen (DE)
(74) Vertreter: Kratzsch, Volkhard, Dipl.-Ing.

(56) Entgegenhaltungen:
- EP-A- 0 718 738
- EP-A- 0 732 642
- WO-A-90/04088
- DE-U- 9 105 021
- GB-A- 2 050 128
- US-A- 3 266 235
- US-A- 3 404 530
- US-A- 4 243 968
- US-A- 4 358 667
- US-A- 4 685 651
- PATENT ABSTRACTS OF JAPAN vol. 9, no. 275 (M-426), 2.November 1985 & JP 60 119319 A (NIHON THERMOSTAT KK), 26.Juni 1985,

## Beschreibung

Die Erfindung bezieht sich auf ein thermostatisches Ventil mit den Merkmalen im Oberbegriff des Anspruchs 1.

Es ist ein thermostatisches Ventil dieser Art bekannt (DE 30 18 682 A1), bei dem in einem Ventilgehäuse ein thermostatisches Arbeitselement in Form eines Dehnstoffelements enthalten ist. Dieses Arbeitselement weist ein Gehäuse mit einem Ventilglied darauf für die Steuerung eines zugeordneten Ventilsitzes im Ventilgehäuse auf. Im Inneren des Gehäuses ist ein Dehnstoff, z.B. Wachs, enthalten. In diesen Dehnstoff im Gehäuse taucht ein Kolben ein, der an einem Bügel des Ventilgehäuses abgestützt ist, wodurch sich das Gehäuse bei sich erwärmendem Dehnstoff aufgrund der Volumenzunahme dieses relativ zum Kolben verschieben kann. Der Kolben ist am Ende mit einer Heizkerze versehen, die eine elektrische Heizeinrichtung enthält und zur Erwärmung des Dehnstoffs dient. An die Heizeinrichtung sind elektrische Leitungen angeschlossen, die durch den Kolben hindurch nach außen geführt sind. Dieses Ventil bildet mit allen Einzelbestandteilen eine fertig zu montierende und zu kalibrierende Einheit. Die Herstellung und die Montage dieses Ventils ist einschließlich der anschließenden Kalibrierung aufwendig. Da die elektrischen Leitungen aus dem Ventil herausgeführt werden, sind diese nicht zuverlässig fixiert und sicher gehalten, wobei noch die Anschlüsse mit einem nicht gezeigten Kabel oder einer Steckeraufnahme oder einem Stecker od.dergl. hergestellt werden müssen. Da die herausgeführten Kabel dort verlaufen, wo das zu steuernde Medium fließt, ergeben sich daraus auch sonstige Nachteile, vor allem die Gefahr etwaiger Kurzschlüsse. Die Leitungen und deren Isolierungen sind dem hindurchfließenden Medium ausgesetzt, so dass die Gefahr besteht, dass diese Leitungen Schaden nehmen. Es besteht die Gefahr etwaiger Kabelbrüche, Defekte, Kurzschlüsse od.dergl. Ungelöst ist hierbei, wie die herausgeführten elektrischen Leitungen weitergeführt sind, womit diese verbunden sind od.dergl.

Aus der nicht vorveröffentlichten EP 838 580 A1 ist ein thermostatisches Ventil bekannt, das in einem Ventilgehäuse ein thermostatisches Arbeitselement in Form eines Dehnstoffelements enthält. Das Arbeitselement weist ein Gehäuse mit Ventilglied darauf für die Steuerung eines zugeordneten Ventilsitzes im Ventilgehäuse auf. Im Inneren des Gehäuses ist ein Dehnstoff, z.B. Wachs enthalten. In diesen Dehnstoff im Gehäuse taucht von oben her ein Kolben ein, der an einem Bügel des Ventilgehäuses abgestützt ist, wodurch sich das Gehäuse bei sich erwärmendem Dehnstoff aufgrund der Volumenzunahme relativ zum Kolben verschieben kann. In Abstand unterhalb des Kolbenendes führt in den Dehnstoff ein elektrisches Heizelement zur Erwärmung hinein, das z.B. aus einem keramischen Heizelement in Form Platte mit gedruckter Schaltung besteht. Die Heizeinrichtung wird über elektrische Leitungen gespeist, die in einer bodenseitigen Kappe des Arbeitselements verlaufen und aus dieser am Ende herausgeführt sind. Die Kappe ist fester Bestandteil des Gehäuses des Dehnstoffelements, wodurch sich bei der Ventilbetätigung mit dem Gehäuse und dem Ventilglied auch das herausgeführte Kabel bewegt. Die elektrischen Leitungen sind in der Kappe mit einer Isolierung versehen und führen durch eine weitere Isolierung dazwischen aus der Kappe heraus, wo eine Dichthülse aus bei Wärme schrumpfendem Material als Dichtabschluss vorgesehen ist. Hierbei liegen die aus dem Arbeitselement herausgeführten elektrischen Leitungen der Heizeinrichtung somit dort, wo das zu steuernde Medium fließt, mit allen sich daraus ergebenden Nachteilen. Die elektrischen Leitungen müssen von dort aus dem Ventilgehäuse herausgeführt werden, was nur mit erheblichem Aufwand möglich ist. Nachteilig ist ferner, dass die elektrischen Leitungen der Heizeinrichtung und Anschlüsse des Kabels der Gefahr von Kabelbrüchen, Kurzschlüssen od.dergl. Defekten im Leitungsverlauf unterliegen.

Es ist ferner ein ähnliches thermostatisches Ventil bekannt (DE 42 33 913 A1), bei dem ebenfalls in den im Inneren des Gehäuses eines thermostatischen Arbeitselements befindlichen Dehnstoff eine elektrische Heizeinrichtung plaziert ist, deren Leitungen an dem Ende aus dem Gehäuse des Arbeitselements herausgeführt sind, das dem Kolben gegenüberliegt. Der Kolben taucht in eine etwa taschenartige Membran ein, die den Kolben umgibt und das Innere mit dem Dehnstoff des Arbeitselements nach außen hin abdichtet. Auch hierbei verlaufen die herausgeführten elektrischen Leitungen der Heizeinrichtung bei Verwendung als thermostatisches Ventil dort, wo das zu steuernde Medium fließt, mit allen sich dadurch ergebenden Nachteilen.

Der Erfindung liegt die Aufgabe zugrunde, ein thermostatisches Ventil der eingangs genannten Art zu schaffen, das bei kompakter und kostengünstiger Gestaltung eine zuverlässige Fixierung, Isolierung und Halterung der elektrischen Leitungen einschließlich der Anschlüsse des Kabels gewährleistet, wobei die Gefahr etwaiger Kabelbrüche, Kurzschlüsse oder dergl. Defekte im Leitungsverlauf vermieden wird. Ferner soll die Montage vereinfacht werden, ohne dass es einer besonderen Justierung des fertig montierten Ventils überhaupt bedarf.

Die Aufgabe ist bei einem thermostatischen Ventil der eingangs genannten Art gemäß der Erfindung durch die Merkmale im Anspruch 1 gelöst. Das erfindungsgemäße Ventil ist nicht nur kompakt und kostengünstig, sondern die elektrischen Leitungen, Anschlüsse und Lötstellen sind zuverlässig fixiert, voneinander isoliert und so sicher gehalten, daß etwaige Kabelbrüche, Kurzschlüsse od. dgl. Defekte im Leitungsverlauf vermieden werden. Die Anordnung ist gleichermaßen bei angeschlossenem Kabel wie auch bei einer Steckeraufnahme (Steckbuchse) oder bei einem statt dessen vorgesehenen Stecker möglich. Dadurch, daß die elektrischen Leitungen mit den Anschlüssen durch Löten verbunden sind, ist eine zuverlässige gut leitende und widerstandsarme Verbindung geschaffen, die einfach, kostengünstig und mit reproduzierbarer Güte herstellbar ist. Durch die Einbettung in Kunststoffmaterial sind die Leitungen, Anschlüsse und Lötstellen geschützt gegen äußere Einflüsse. Die Erfindung eröffnet zugleich eine einfache Montagemöglichkeit für das Arbeits'element und schafft ferner die Voraussetzungen dafür, auf eine besondere Justierung des Arbeitselements verzichten zu können und statt dessen die Justierung beim Einbau und Zusammenbau im Ventilgehäuse vornehmen zu können. Die Montage der einzelnen Bauteile ist einfach. Durch die Erfindung ist es ermöglicht, den Kolben des Arbeitselements mitsamt den elektrischen Anschlüssen und Halterungen als einbaufertiges Einbauteil zu gestalten und für den Einbau in das Ventilgehäuse bereitzuhalten. Der Einbau dieses Einbauteiles in das Ventilgehäuse kann schnell und einfach und dabei reproduzierbar vorgenommen werden, wobei der Kolben in das Gehäuse, insbesondere den Dehnstoff, des thermo-statischen Arbeitselementes einsteckbar ist. Durch die Einbautiefe des Einbauteils im Ventilgehäuse und damit die Einstecktiefe des Kolbens im Gehäuse des Arbeitselements erfolgt zugleich dessen Justierung, so daß eine besondere Justierung nicht mehr notwendig ist.

Weitere Erfindungsmerkmale und vorteilhafte Ausgestaltungen des thermostatischen Ventils ergeben sich aus den Ansprüchen 2 bis 29.

Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert.
Es zeigen:
- Fig. 1: einen schematischen Schnitt mit teilweiser Seitenansicht eines thermostatischen Ventils gemäß einem ersten Ausführungsbeispiel,
- Fig. 2: eine schematische perspektivische Ansicht des Kolbens des Ventils in Fig. 1,
- Fig. 3: einen schematischen Schnitt der Einzelheit III des Ventils in Fig. 1 in größerem Maßstab,
- Fig. 4: eine teilweise geschnittene Seitenansicht eines thermostatischen Ventils etwa entsprechend derjenigen in Fig. 1 eines zweiten Ausführungsbeispiels,
- Fig. 5: eine schematische, teilweise geschnittene Seitenansicht etwa entsprechend derjenigen in Fig. 1 eines Ventils gemäß einem dritten Ausführungsbeispiel,
- Fig. 6: einen schematischen Schnitt etwa entsprechend demjenigen in Fig. 3 des oberen Teils des Ventils in Fig. 5.
- Fig. 7: eine schematische, teilweise geschnittene Seitenansicht etwa entsprechend derjenigen in Fig. 1 eines Ventils gemäß einem vierten Ausführungsbeispiel.

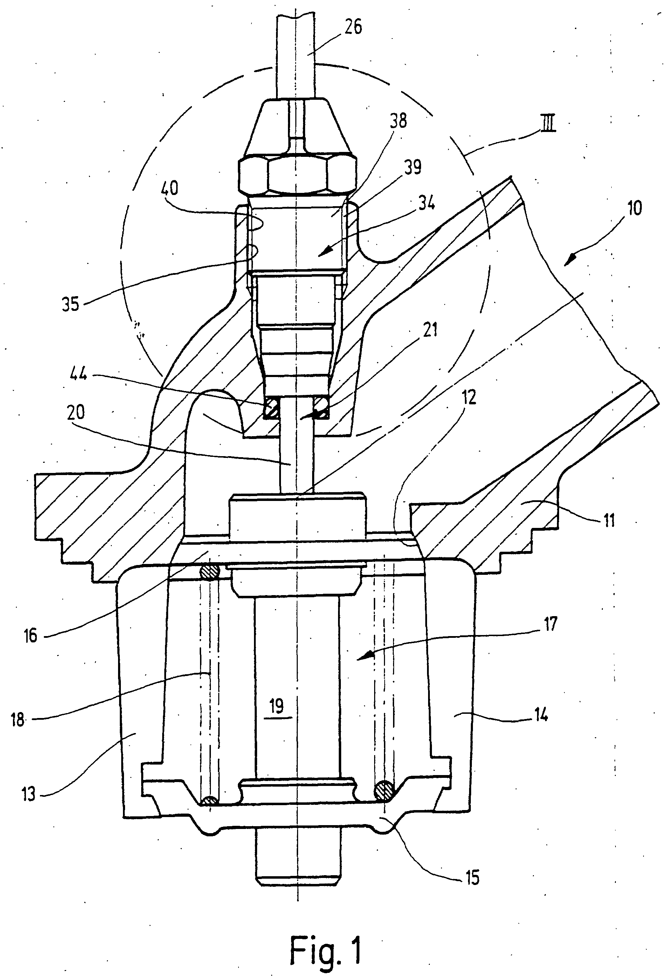

In Fig. 1 bis 3 ist ein erstes Ausführungsbeispiel eines thermostatischen Ventils 10 gezeigt, das in dieser Form entweder als einbaufertige Einheit zur Verfügung steht oder in dieser Form Teil eines nicht weiter sichtbaren Gehäuses ist. Das Ventil 10 hat ein Ventilgehäuse 11 mit ringförmigem Ventilsitz 12 und z.B. einstückigen, nach unten ragenden Haltearmen 13 und 14 für ein Widerlager 15. Der Ventilsitz 12 wird von einem Ventilteller 16 beherrscht, der an einem eingesetzten thermostatischen Arbeitselement 17, insbesondere Dehnstoffelement, gehalten ist. Am Ventilteller 16 ist eine Rückstellfeder 18 mit einem Ende abgestutzt, deren anderes Ende am Widerlager 15 abgestützt ist.

Das Arbeitselement 17, insbesondere Dehnstoffelement, weist ein Gehäuse 19 auf, in dem ein Dehnstoff, z.B. Wachs, enthalten ist, der sich bei Erwärmung ausdehnen kann. In den Dehnstoff taucht ein Kolben 20 ein, der bei sich erwärmendem Dehnstoff aufgrund der Volumenzunahme aus dem Gehäuse 19 ausschiebbar ist. Der Kolben 20 ist mit dem dem Gehäuse 19 abgewandten Ende am Ventilgehäuse 11 abgestützt, so daß'sich bei Volumenzunahme des Dehnstoffes im Gehäuse 19 letzteres relativ zum abgestützten Kolben 20 gegen die Wirkung der Rückstellfeder 18 verschieben kann, wodurch der Ventilteller 16 vom Ventilsitz 12 abgehoben wird. Bei Abkühlung des Dehnstoffes ergibt sich eine Volumenabnahme, so daß über die Rückstellfeder 18 der Kolben 20 relativ zum Gehäuse 19 wieder eingeschoben wird.

Das Arbeitselement 17 ist im Inneren mit einer elektrischen Heizeinrichtung 21 zur Erwärmung des Dehnstoffes versehen, an die elektrische Leitungen 22 und 23 angeschlossen sind, die beim ersten Ausführungsbeispiel in Fig. 1 bis 3 mit Anschlüssen 24, 25 eines Kabels 26 durch Löten verbunden sind.

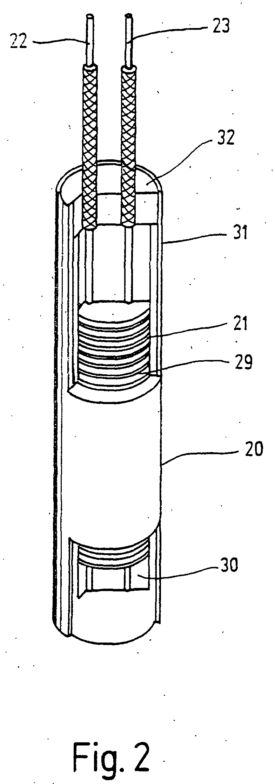

Wie sich insbesondere aus Fig. 2 ergibt, ist die elektrische Heizeinrichtung 21 des Arbeitselements 17 im Inneren des Kolbens 20 angeordnet. Die elektrische Heizeinrichtung 21 weist einen Heizleiter 29 auf, der auf einem Keramik-Wickelkörper 30 aufgewickelt ist. Der Kolben 20 ist als innen hohle Patrone 31 ausgebildet, die im Inneren den Heizleiter 29 enthält und aus der am oberen stirnseitigen Ende 32 die elektrischen Leitungen 22 und 23 herausgeführt sind.

Der Kolben 20 ist von außen koaxial in das Gehäuse 19 des Arbeitselements 17 und in den darin enthaltenen Dehnstoff eingesteckt und demnach daraus auch wieder herausziehbar.

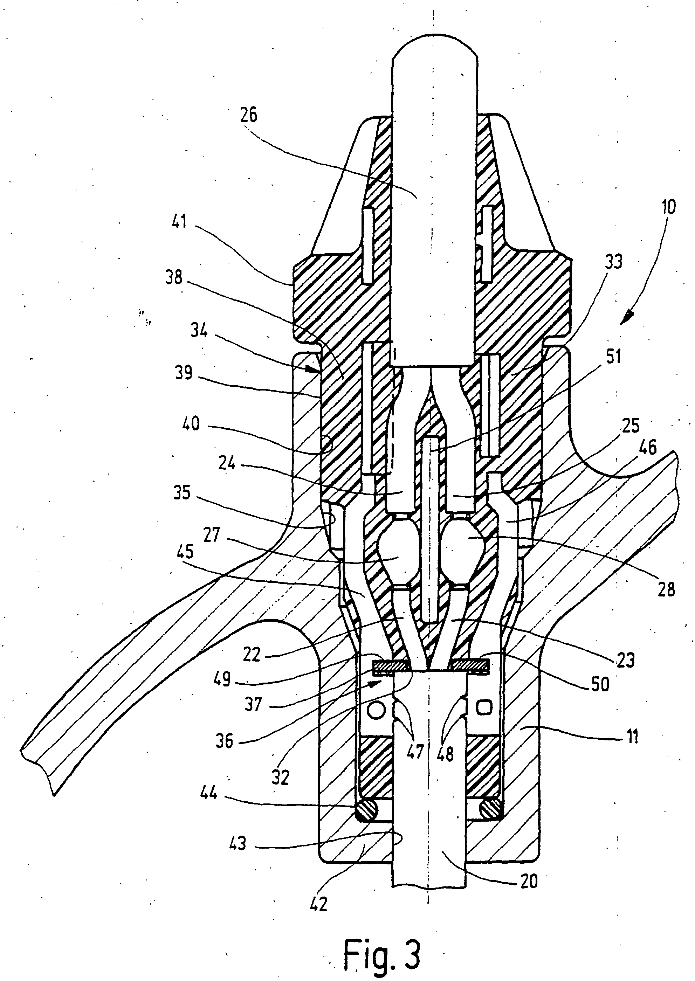

Wie insbesondere Fig. 3 zeigt, verlaufen die elektrischen Leitungen 22, 23 der Heizeinrichtung 21, die Anschlüsse 24, 25 und das nach oben herausführende Kabel 26 im wesentlichen parallel zur Längsmittelachse des Kolbens 20 und vom Kolben 20 weg nach oben. Die elektrischen Leitungen 22, 23, die Anschlüsse 24, 25 und das herausführende Kabel 26 sowie die Lötstellen 27, 28 sind in Kunststoffmaterial 33 eingebettet. Dabei ist der Kolben 20 mit den herausgeführten Leitungen 22, 23, mit den sich in axialer Verlängerung erstreckenden Anschlüssen 24,25 und dem herausführenden Kabel 26 durch Löten zu einer Einheit verbunden. Bereits bei der Herstellung sind der Endbereich des Kolbens 20, dessen herausgeführte Leitungen 22, 23, die über die Lötstellen 27,28 mit den Leitungen 22, 23 verbundenen Anschlüsse 24,25 und der anschließende Endabschnitt des Kabels 26 als zum Kolben 20 im wesentlichen koaxiales Gesamtgebilde vom Kunststoffmaterial 33 umspritzt unter Bildung einer einbaufähigen Einheit in Form eines zum Arbeitselement 17 etwa koaxialen Einbauteiles 34. Dieses Einbauteil 34 wird in dieser Form einbaufertig bereitgestellt und ist in eine oben offene Aufnahme 35 des Ventilgehäuses 11 von oben her ein-setzbar, wobei der Kolben 20 in das Gehäuse 19 des Arbeitselements 17 und in den Dehnstoff darin bei dieser Montage einsteckbar ist.

Das vom umspritzten Kunststoffmaterial 33 gebildete Einbauteil 34 enthält eine innere Abstützung 36 in Form z.B. einer Stützscheibe 37 für das Ende 32 des Kolbens 20. Das Einbauteil 34 ist mehr oder weniger tief und dadurch mit einstellbarem Axialmaß in die Aufnahme 35 des Ventilgehäuses 11 einbringbar und darin festlegbar unter gleichzeitiger Herstellung der dem gewünschten Sollhub des Ventils 10 entsprechenden Einstecktiefe des Kolbens 20 in das Gehäuse 19 des Arbeitselements 17. Dadurch wird ein besonderer Justagevorgang des Ventils 10 eingespart, da auf diese Weise gleich die Justierung des Ventils 10 vorgenommen wird. Das Einbauteil 34 weist einen Abschnitt 38 mit Außengewinde 39 auf, der in ein Innengewinde 40 der Aufnahme 35 des Ventilgehäuses 11 mehr oder weniger weit einschraubbar ist. Oberhalb des Abschnittes 38 weist das Einbauteil 34 eine äußere Werkzeugangriffsfläche 41, z.B. eine Sechskant, auf.

Die Aufnahme 35 im Ventilgehäuse 11 ist im wesentlichen zylindrisch und mehrfach abgestuft und unten durch einen Boden 42 abgeschlossen, der eine zentrale Bohrung 43 enthält, durch die der Kolben 20 hindurchragt. Zwischen dem Boden 42 und dem zugewandten Ende des Einbauteiles 34 ist eine Dichtung 44, z.B. ein O-Ring, angeordnet.

Innerhalb des Kunststoffmaterials 33 sind etwa achs-parallele, z.B. streifenförmige, Einlagen 45, 46 enthalten, die z.B. aus Metall bestehen und vom Kunststoffmaterial 33 umspritzt sind. Das Einbauteil 34 weist z.B. zumindest zwei derartige Einlagen 45,46 oder auch mehrere dieser auf. Die beiden sichtbaren Einlagen 45,46 liegen einander diametral gegenüber, wobei sie - in Querrichtung betrachtet - auf der Außenseite des Endbereichs des Kolbens 20, der daraus herausgeführten Leitungen 22, 23, der Lötstellen 27, 28 und der über letztere verbundenen Anschlüsse 24,25 des anschließenden Endabschnitts des Kabels 26 verlaufen. Dabei liegen die Einlagen 45,46 mit ihrem unteren Ende am Endbereich des Kolbens 20 außen an. Dort können die Einlagen 45,46 auf der zum Kolben 20 hinweisenden Seite Vorsprünge 47,48, z.B. etwa zahnartige Spitzen, aufweisen, die von außen her in das Wandungsmaterial des Kolbens 20, das z.B. aus Chromnickelstahl besteht, eingreifen und dadurch eine zusätzliche formschlüssige Verankerung bilden. Der Kolben 20 ist mit dem oberen stirnseitigen Ende 32 an der Stützscheibe 37, die vorzugsweise aus Metall besteht, abgestützt, wobei die Stützscheibe 37 an den Einlagen 45,46 formschlüssig gehalten ist. Die Einlagen 45,46 enthalten hierzu jeweils eine innen offene Ausnehmung 49 bzw. 50, in der die Stützscheibe 37 lagert. Dadurch ist eine zuverlässige axiale Abstützung des Kolbens 20 im Inneren des Einbauteiles 34 erreicht. letzteres enthält im Kunststoffmaterial 33 im mittleren Bereich zwischen den elektrischen Leitungen 22, 23, den Lötstellen 27,28 und den Anschlüssen 24,25 des Kabels 26 ein Einlegeteil 51, welches die Leitungen 22, 23, die Lötstellen 27,28 und die Anschlüsse 24,25 voneinander trennt und in Querabstand voneinander hält. Das Einlegeteil 51 besteht z.B. aus Isoliermaterial oder statt dessen aus Metall od.dergl.

Das Kunststoffmaterial 33 besteht aus einem thermo-plastischen Material, z.B. aus Polyamid, und hat eine Temperaturfestigkeit von mehr als 140°C.

Bei der Montage wird das Arbeitselement 17, jedoch ohne Kolben 20, mitsamt dem Ventilteller 16, dem Widerlager 15 und der Rückstellfeder 18 in das Ventilgehäuse 11 eingebaut. Von oben her kann dann das fertige Einbauteil 34 in das Innengewinde 40 der Aufnahme 35 eingeschraubt werden. Beim Einschrauben tritt der Kolben 20 in das Innere des Gehäuses 19 des Arbeitselements 17 ein, in dem der Dehnstoff enthalten ist. Das Einbauteil 34 wird soweit eingeschraubt und dabei der Kolben 20 so tief in das Gehäuse 19 und in den darin enthaltenen Dehnstoff hineinbewegt, daß eine Einstellung des Ventils 10 auf den vorgegebenen Sollhub erfolgt und somit kein besonderer zusätzlicher Justiervorgang des Ventils 10 notwendig ist. Bei Bedarf ist das Einbauteil 34 leicht entnehmbar und austauschbar. Es kann als separates Teil produziert, auf Lager gehalten und einbaufertig bereitgestellt werden.

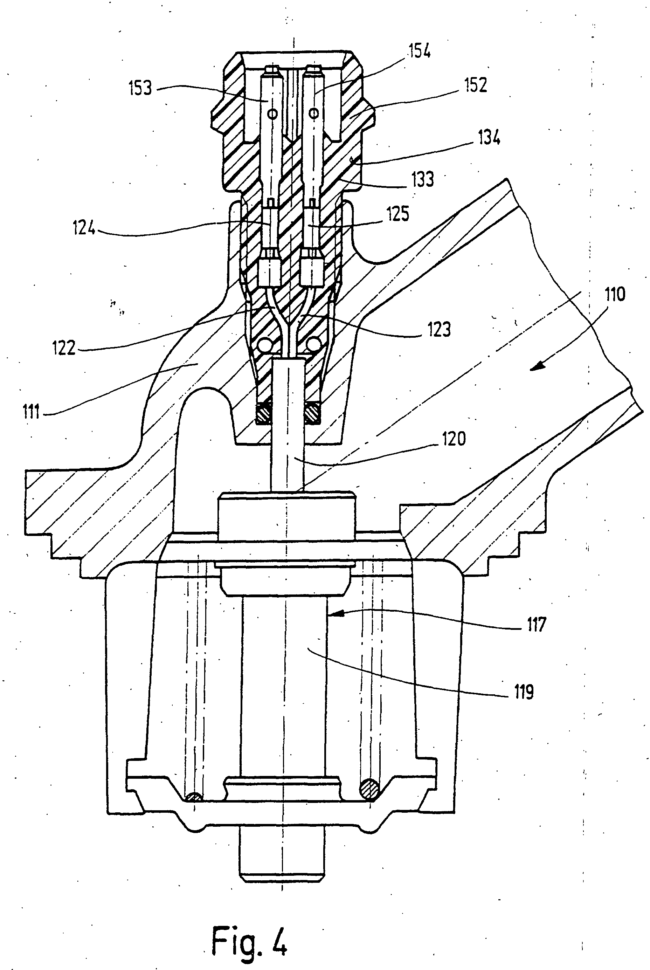

Bei dem in Fig. 4 gezeigten zweiten Ausführungsbespiel sind für die Teile, die dem ersten Ausführungsbeispiel entsprechen, um 100 g'rößere Bezugszeichen verwendet, so daß dadurch auf, die Beschreibung des ersten Ausführungsbeipiels Bezug genommen ist.

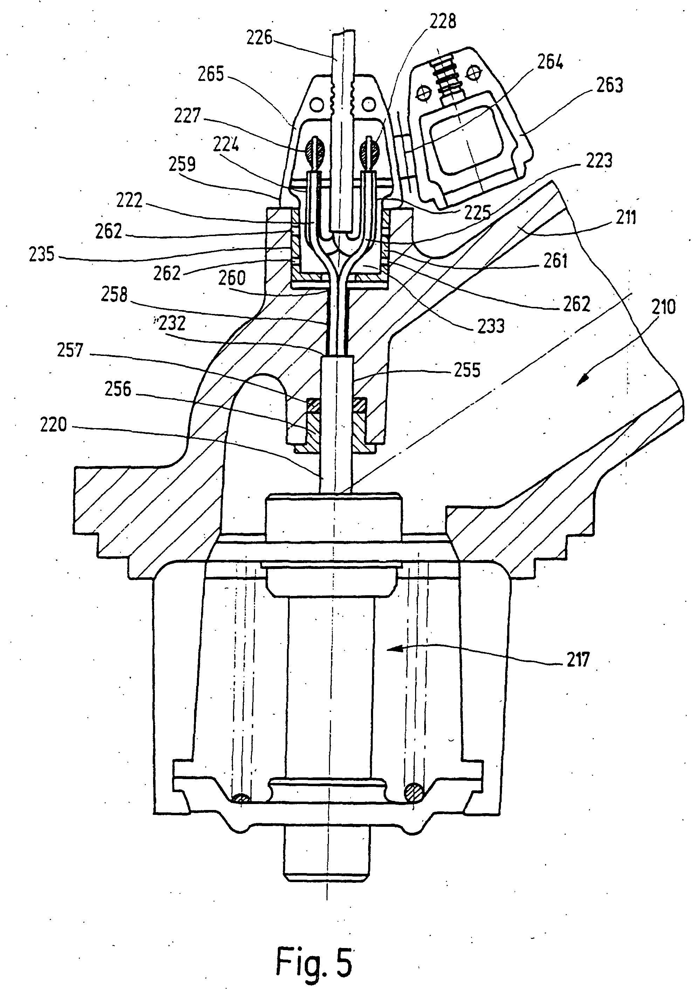

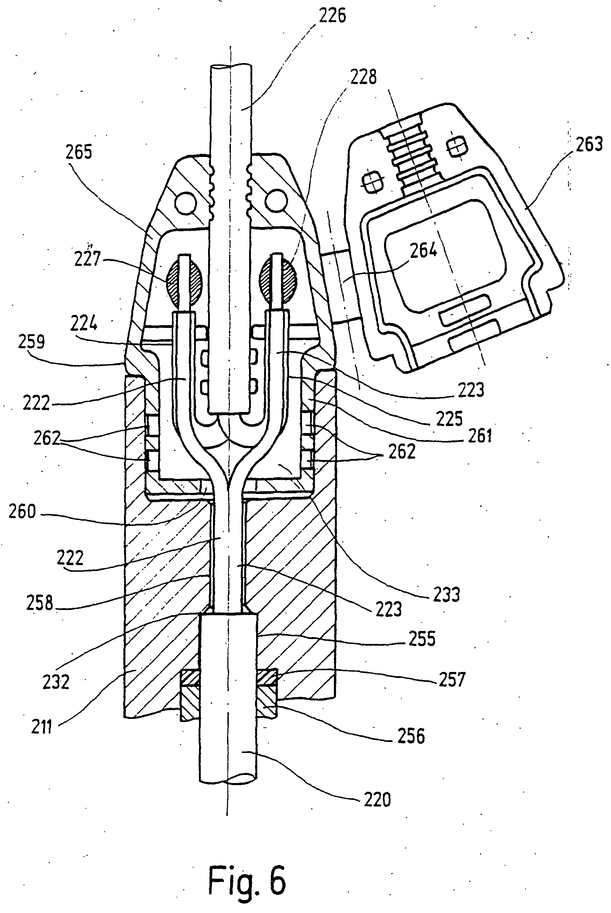

Das zweite Ausführungsbeispiel unterscheidet sich vom ersten im wesentlichen allein dadurch,.daß die elektrischen Leitungen 122, 123, die aus dem Kolben 120 herausgeführt sind, mit dazu fluchtenden Anschlüssen 124, 125 einer Steckeraufnahme 152 durch Löten verbunden sind, die aus dem Kunststoffmaterial 133 des Einbauteils 134 geformt ist, wobei die Steckerstifte 153, 154 in das Kunststoffmaterial 133 eingeformt sind. Wie beim ersten Ausführungsbeispiel, ist auch hier das Einbauteil 134, zu dem auch der Kolben 120 gehört, als fertiges Bauteil bereitgestellt und in das Ventilgehäuse 111 wie beim ersten Ausführungsbeispiel eingeschraubt, wobei der Kolben 120 in das Gehäuse 119 des Arbeitselements 117 soweit eingeschoben wird, wie es der Einschraubtiefe des Einbauteils 134 entspricht. Bei dem in Fig. 5 und 6 gezeigten'dritten Ausführungsbeispiel sind aus den gleichen Gründen wie beim zweiten Ausführungsbeispiel in Fig. 4 für die Teile, die dem ersten Ausführungsbeispiel entsprechen, um 200 größere Bezugszeichen verwendet.

Das Ventil 210 entspricht im wesentlichen demjenigen des ersten Ausführungsbeispieles, insbesondere hinsichtlich der Gestaltung des thermostatischen Arbeitselements 217 mit Einzelheiten einschließlich des Kolbens 220. Ein Unterschied gegenüber dem ersten und zweiten Ausführungsbeispiel liegt darin, daß der Kolben 220 in eine Bohrung 255 des Ventilgehäuses 211 von unten her eingesetzt und mit dem stirnseitigen Ende 232 im Ventilgehäuse 211 axial abgestützt ist. Im Ventilgehäuse 211 ist unterhalb der Bohrung 255 eine Buchse 256 unter Zwischenfügung einer Dichtung 257 eingesetzt. Die Buchse 256 dient der zusätzlichen Führung des Kclbens 220. An die Bohrung 255 schließt sich ein Kanal 258 z.B. kleineren Durchmessers an, der zur im wesentlichen zylindrischen Aufnahme 235 im Ventilgehäuse 211 führt. Der Kolben 220 ist wie beim ersten und zweiten Ausführungsbeispiel ausgebildet. Die am Ende 232 herausgeführten elektrischen Leitungen 222, 223 sind durch den Kanal 258 hindurch in Fig. 5 nach oben geführt und voneinanderweg gespreizt. In die Aufnahme 235 ist von oben her ein zumindest auf einem Teil seiner Axialerstreckung zweiteiliges und klappbares Kunststoffgehäuse 259 eingesetzt, in das die Leitungen 222, 223 durch eine untere Öffnung 260 hineingeführt sind. Das Kunststoffgehäuse 259 dient bei diesem dritten Ausführungsbeispiel zur zentralen Halterung und Führung eines Endabschnittes des Kabels 226, dessen Anschlüsse 224, 225 in Inneren des Kunststoffgehäuses 259 mit den Leitungen 222, 223 des Kolbens 220 durch Löten verbunden sind, was durch die Lötstellen 227, 228 verdeutlicht ist. Die Anschlüsse 224, 225 des Kabels 226 sind vom Kabelende aus gegensinnig zum Kabelverlauf hochgeführt, so daß jeder Anschluß 224, 225 mit dem Endabschnitt des Kabels 226 etwa ein U bildet. Die hochgeführten Anschlüsse 224, 225 verlaufen etwa parallel zur jeweils zugeordneten Leitung 222, 223 des Kolbens 220, wobei beide mit ihrem oberen, benachbarten Ende miteinander verlötet sind. Zwischen den Lötstellen 227, 228 verläuft als Trennung und Abstandshalter das Kabel 226.

Der Bereich zwischen der Verbindung der Leitungen 222, 223 und der Anschlüsse 224, 225 einerseits und dem Kunststoffgehäuse 259 andererseits ist mit Kunststoffmaterial 233, z.B. Polyamid, ausgefüllt. Dieses Kunststoffmaterial 233 ist eingespritzt. Das Kunststoffgehäuse 259 ist mit einem vorzugsweise zylindrischen Teil 261 fest in der Aufnahme 235 gehalten, z.B. mittels Gewinde, Klemmung od. dgl. Die Aufnahme 235 kann auf der Wandungsoberfläche Rauhigkeiten aufweisen, z.B. aufgerauht sein, um die Haftung des eingesetzten Kunststoffgehäuses 259 zu erhöhen. Das Kunststoffgehäuse 259 enthält in der Wandung bis zur Außenseite reichende Durchbrüche 262, die vom Kunststoffmaterial 233 ausgefüllt sind, das im Bereich der Durchbrüche 262 in Berührungskontakt mit der Wandungsoberfläche der Aufnahme 235 steht, wodurch ebenfalls die Haftung erhöht wird.

In Fig. 5 und 6 ist von dem zweiteiligen Bereich des Kunststoffgehäuses 259 der eine Teil 263 abgeklappt gezeigt. Dieser ist über ein Filmscharnier 264 mit dem anderen Teil 265 verbunden.

Nach dem Herstellen der Lötverbindung, die durch die Lötstellen 227, 228 verdeutlicht ist, wird der Teil 263 mit dem anderen Teil 265 zusammengeklappt und damit der obere Bereich des Kunststoffgehäuses 259 geschlossen. Anschließend wird in das Innere des Kunststoffgehäuses 259 und in den Bereich zwischen dem Endabschnitt des Kabels 226 und den Leitungen 222, 223 und den Anschlüssen 224, 225 unter Einschluß der Lötstellen 227, 228 Kunststoffmaterial 233 eingebracht, das diesen Bereich ausfüllt. Das Einbringen des Kunststoffmaterials 233 erfolgt z.B. durch Einspritzen. Hierbei gelangt das Kunststoffmaterial 233 auch in die Durchbrüche 262 und durch diese hindurch bis zur Wandungsoberfläche der Aufnahme 235 unter Steigerung der Haftung des eingesetzten, z.B. eingepreßten Teils 261 des Kunststoffgehäuses 259.

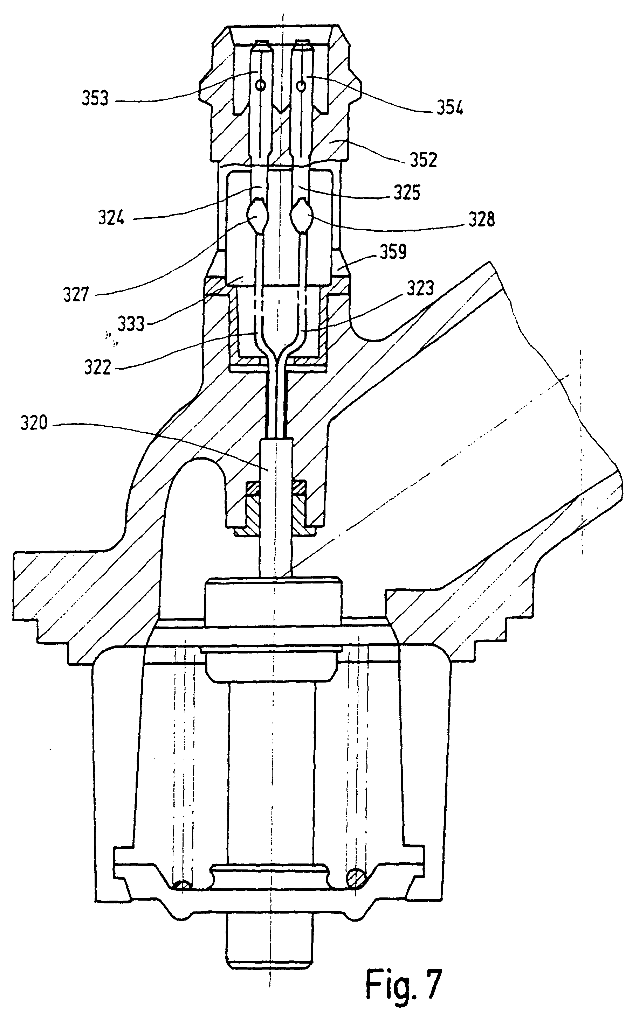

Bei dem in Fig. 7 gezeigten vierten Ausführungsbeispiel ist an das Kunststoffgehäuse 359 eine Steckeraufnahme 352 angeschlossen, wobei die Steckeraufnahme 352 z.B. ein separates Teil oder statt dessen einstückig mit dem Kunststoffgehäuse 359 sein kann. Die Leitungen 322, 323 des Kolbens 320 fluchten mit den Anschlüssen 324, 325 der Steckeraufnahme 352, wobei diese wiederum durch Löten (Lötstellen 327,328) verbunden sind. Auch bei diesem Ausführungsbeispiel ist das Innere des Kunststoffgehäuses 359 in gleicher Weise wie beim dritten Ausführungsbeispiel in Fig. 5 und 6 mit Kunststoffmaterial 333, z.B. Polyamid, ausgefüllt. Im übrigen kann das Ventil gemäß dem vierten Ausführungsbeispiel so wie beim dritten Ausführungsbeispiel in Fig. 5 und 6 gestaltet sein.

## Patentansprüche

1. Thermostatisches Ventil, das in einem Ventilgehäuse (11 ) ein thermostatisches Arbeitselement (17) in Form eines Dehnstoffelements enthält, das ein Gehäuse (19) mit einem Ventilglied (16) zur Steuerung eines zugeordneten Ventilsitzes (12) im Ventilgehäuse (11) und mit im Inneren enthaltenem Dehnstoff sowie einem in diesen eintauchenden Kolben (20) aufweist, der am Ventilgehäuse (11) abgestützt ist, wodurch sich das Gehäuse (19) bei sich erwärmendem Dehnstoff aufgrund dessen Volumenzunahme relativ zum Kolben (20) verschieben kann, und der im Inneren mit einer elektrischen Heizeinrichtung (21) zur Erwärmung versehen ist, an die herausgeführte elektrische Leitungen (22,23) angeschlossen sind,
**gekennzeichnet durch**
ein zum Arbeitselement (17; 117) etwa koaxiales Einbauteil (34; 134) aus Kunststoffmaterial (33;133; 233; 333), das eine innere Abstützung (36) für den Kolben (20; 120) enthält und mit eingestelltem Axialmaß in eine Aufnahme (35) des Ventilgehäuses (11) eingebracht und darin festgelegt ist, wobei der Kolben (20; 120) in das Gehäuse (19;119) des Arbeitselements (17; 117) und den darin enthaltenen Dehnstoff eingesteckt ist unter gleichzeitiger Herstellung der dem gewünschten Sollhub des Ventils (10) entsprechenden Einstecktiefe des Kolbens (20; 120), und wobei ein Endbereich (32) des Kolbens (20; 120) mit seiner inneren Abstützung (36), die elektrischen Leitungen (22, 23; 122, 123; 222, 223; 322, 323) mit **durch** Löten damit verbundenen elektrischen Anschlüssen (24, 25; 124, 125; 224, 225; 324, 325) eines herausführenden Kabels (26; 226) oder einer Steckeraufnahme (152; 352) oder eines Steckers (153,154) einschließlich der Lötstellen (27, 28; 127, 128; 227, 228; 327, 328) in das Kunststoffmaterial (33; 133; 233; 333) eingebettet sind unter Bildung des einbaufertigen, in die Aufnahme (35) des Ventilgehäuses (11) eingesetzten Einbauteils (34; 134).

2. Thermostatisches Ventil nach Anspruch 1,
**dadurch gekennzeichnet,**
**dass** das Kunststoffmaterial (33;133) aus einem thermoplastischen Material, z.B. aus Polyamid, besteht.

3. Thermostatisches Ventil nach Anspruch 1 oder 2,
**gekennzeichnet durch**
eine Temperaturfestigkeit des Kunststoffmaterials (33;133) bis über 140° C.

4. Thermostatisches Ventil nach einem der Ansprüche 1 bis 3,
**dadurch gekennzeichnet,**
**dass** die elektrische Heizeinrichtung (21) im Inneren des Kolbens (20;120;220;320) angeordnet ist.

5. Thermostatisches Ventil nach einem der Ansprüche 1 bis 4,
**dadurch gekennzeichnet,**
**dass** der Kolben (20;120;220;320) als innen hohle, einen elektrischen Heizleiter (29) enthaltende Patrone (31) ausgebildet ist, aus der an einem stirnseitigen Ende (32) die elektrischen Leitungen (22,23;122;123;222, 223;322;323) herausgeführt sind.

6. Thermostatisches Ventil nach einem der Ansprüche 1 bis 5,
**dadurch gekennzeichnet,**
**dass** die elektrischen Leitungen (22,23;122,123;222,223;322,323) der Heizeinrichtung (21),die Anschlüsse (24,25;124,125,224,225;324,325) und das herausgeführte Kabel (26;226) bzw. die Steckeraufnahme (152;352) im wesentlichen achsparallel zur Längsmittelachse des Kolbens (20;120;220;320) und vom Kolben (20;120;220;320) weg verlaufen.

7. Thermostatisches Ventil nach einem der Ansprüche 1 bis 6,
**dadurch gekennzeichnet,**
**dass** der Kolben (20;120;320) mit den herausgeführten Leitungen (22,23;122, 123;322,323) seiner inneren Heizeinrichtung (21) mit sich in axialer Verlängerung erstreckenden Anschlüssen (24,25;124,125;324,325) eines herausführenden Kabels (26) bzw. einer Steckeraufnahme (152;352) durch Löten zu einer Einheit verbunden ist.

8. Thermostatisches Ventil nach einem der Ansprüche 1 bis 7,
**dadurch gekennzeichnet,**
**dass** das Einbauteil (34;134) einen Abschnitt (38) mit Außengewinde (39) aufweist, der in ein Innengewinde (40) der Aufnahme (35) des Ventilgehäuses (11) eingeschraubt ist.

9. Thermostatisches Ventil nach Anspruch 8,
**dadurch gekennzeichnet,**
**dass** das Einbauteil (34;134) eine äußere Werkzeugangriffsfläche (41), z.B. einen Sechskant, aufweist.

10. Thermostatisches Ventil nach einem der Ansprüche 7 bis 9,
**dadurch gekennzeichnet,**
**dass** der Kolben (20;120) durch eine Bohrung (43) am Boden (42) der Aufnahme (35) im Ventilgehäuse (11) hindurchragt.

11. Thermostatisches Ventil nach Anspruch 10,
**dadurch gekennzeichnet,**
**dass** zwischen dem Einbauteil (34;134) und dem Boden (42) der Aufnahme (35) eine Dichtung (44), z.B. ein O-Ring, angeordnet ist.

12. Thermostatisches Ventil nach einem der Ansprüche 1 bis 11,
**dadurch gekennzeichnet,**
**daß** innerhalb des Kunststoffmaterials (33;133) etwa achsparallele, z.B. streifenförmige, Einlagen (45,46) enthalten sind, die mit dem Kunststoffmaterial (33;133) umspritzt sind und vorzugsweise aus Metall bestehen.

13. Thermostatisches Ventil nach Anspruch 12,
**gekennzeichnet durch**
zumindest zwei einander z.B. etwa diametral gegenüberliegende Einlagen (45,46), die auf der Außenseite des Endbereichs des Kolbens (20), der aus diesem herausgeführten Leitungen (22,23), der Lötstellen (27,28), der über letztere verbundenen Anschlüsse (24,25) und des anschließenden Endabschnitts des Kabels (26) verlaufen.

14. Thermostatisches Ventil nach Anspruch 13,
**dadurch gekennzeichnet,**
**daß** die Einlagen (45,46) am Endbereich des Kolbens (20) anliegen.

15. Thermostatisches Ventil nach Anspruch 13 oder 14,
**dadurch gekennzeichnet,**
**daß** die Einlagen (45,46) auf der zum Kolben (20) weisenden Seite Vorsprünge (47,48), z.B. etwa zahnartige Spitzen, aufweisen, die in das Material des Kolbens (20) eingreifen.

16. Thermostatisches Ventil nach einem der Ansprüche 1 bis 15,
**dadurch gekennzeichnet,**
**daß** der Kolben (20) mit seiner endseitigen Stirnfläche (32) an einer Stützscheibe (37),vorzugsweise aus Metall abgestützt ist, die an den Einlagen (45,46) gehalten ist.

17. Thermostatisches Ventil nach Anspruch 16,
**dadurch gekennzeichnet,**
**daß** die Einlagen (45,46) eine nach innen offene Ausnehmung (49,50) enthalten, in der die Stützscheibe (37) lagert.

18. Thermostatisches Ventil nach einem der Ansprüche 6 bis 17,
**dadurch gekennzeichnet,**
**daß** im Kunststoffmaterial (33) im mittleren Bereich zwischen den elektrischen Leitungen (22,23) des Kolbens (20), den Lötstellen (27,28) und den Anschlüssen (24, 25) des Kabels (26) bzw. der Steckeraufnahme (152) ein Einlegeteil (51) enthalten ist, das die Leitungen (22,23), die Lötstellen (27,28) und die Anschlüsse (24,25) voneinander getrennt und in Querabstand voneinander hält.

19. Thermostatisches Ventil nach einem der Ansprüche 1 bis 18,
**dadurch gekennzeichnet,**
**daß** die Steckeraufnahme (152;352) aus Kunststoffmaterial (133;333) geformt ist, in das die Steckerstifte (153,154;353,354) eingeformt sind.

20. Thermostatisches Ventil nach einem der Ansprüche 1 bis 7,
**dadurch gekennzeichnet,**
**daß** der Kolben (220;320) in eine Bohrung (255) des Ventilgehäuses (211) eingesetzt und mit einem Ende (232) daran axial abgestützt ist.

21. Thermostatisches Ventil nach Anspruch 20,
**dadurch gekennzeichnet,**
**daß** die aus dem Kolben (220;320) herausgeführten Leitungen (222,223;322,323) durch einen Kanal (258) im Ventilgehäuse (211) zu einer Aufnahme (235) geführt sind, in die von oben her ein zumindest auf einem Teil seiner Axialerstreckung zweiteiliges und vorzugsweise klappbares Kunststoffgehäuse (259;359) einsetzbar ist, in das die Leitungen (222,223;322,323) hineingeführt sind.

22. Thermostatisches Ventil nach Anspruch 21,
**dadurch gekennzeichnet,**
**daß** das Kunststoffgehäuse (259) zur zentralen Halterung und Führung eines Endabschnittes eines Kabels (226) dient, dessen Anschlüsse (224,225) im Inneren des Kunststoffgehäuses (259) mit den Leitungen (222,223) des Kolbens (220) durch Löten verbunden sind.

23. Thermostatisches Ventil nach Anspruch 22,
**dadurch gekennzeichnet,**
**daß** die Anschlüsse (224,225) des Kabels (226) vom Kabelende aus gegensinnig zum Kabelverlauf hochgeführt sind und die hochgeführten Anschlüsse (224,225) etwa parallel zu einer Leitung (222,223) des Kolbens (220) verlaufen und beide mit ihrem oberen, benachbarten Ende verlötet sind.

24. Thermostatisches Ventil nach einem der Ansprüche 20 bis 23,
**dadurch gekennzeichnet,**
**daß** der Bereich zwischen der Verbindung der Leitungen (222,223;322,323) des Kolbens (220;320) und der Anschlüsse (224,225;324,325) einerseits und dem Kunststoffgehäuse (259;3259) andererseits mit Kunststoffmaterial (233;333), z.B. Polyamid, ausgefüllt ist.

25. Thermostatisches Ventil nach Anspruch 20 oder 21,
**dadurch gekennzeichnet,**
**daß** an das Kunststoffgehäuse (359) eine Steckeraufnahme (352) angeschlossen ist und im Inneren des Kunststoffgehäuses (359) die Leitungen (322,323) des Kolbens (320) einerseits und die Anschlüsse (324,325) der Steckeraufnahme (352) andererseits miteinander fluchten und durch Löten verbunden sind, wobei das Innere des Kunststoffgehähses (359) mit Kunststoffmaterial (333), z.B. Polyamid, ausgefüllt ist.

26. Thermostatisches Ventil nach Anspruch 24 oder 25,
**dadurch gekennzeichnet,**
**daß** das Kunststoffmaterial (233;333) eingespritzt ist.

27. Thermostatisches Ventil nach einem der Ansprüche 21 bis 26,
**dadurch gekennzeichnet,**
**daß** das Kunststoffgehäuse (259;359) in seiner Wandung bis zur Außenseite reichende Durchbrüche (262) enthält, die vom Kunststoffmaterial (233;333) ausgefüllt sind, das im Bereich der Durchbrüche (262) in Berührungskontakt mit der Wandoberfläche der Aufnahme (235) des Ventilsgehäuses (211) steht.

28. Thermostatisches Ventil nach einem der Ansprüche 21 bis 27,
**dadurch gekennzeichnet,**
**daß** das Kunststoffgehäuse (259;359) mit einem vorzugsweise zylindrischen Teil (261) fest in der Aufnahme (235) gehalten ist, z.B. mittels Gewinde, Klemmung od.dergl.

29. Thermostatisches Ventil nach einem der Ansprüche 21 bis 28,
**dadurch gekennzeichnet,**
**daß** die Aufnahme (235) auf der Wandungsoberfläche Rauhigkeiten aufweist, z.B. aufgerauht ist.

## Claims

1. Thermostatic valve which contains a thermostatic working element (17) in the form of an expansion material element in a valve housing (11), which thermostatic working element (17) has a housing (19) with a valve member (16) to control an associated valve seat (12) in the valve housing (11) and with expansion material contained in the interior and a piston (20) which plunges therein which is supported on the valve housing (11), so the housing (19) can be displaced when the expansion material heats up due to the increase in volume thereof relative to the piston (20), and which piston (20) is provided in the interior with an electric heating device (21) for heating to which guided-out electric lines (22, 23) are attached, **characterised by** a built-in component (34; 134) which is approximately coaxial to the working element (17; 117) and made of plastics material (33; 133; 233; 333), which contains an inner support (36) for the piston (20; 120) and is introduced with an adjusted axial dimension into a receiver (35) of the valve housing (11) and is secured therein, the piston (20; 120) being inserted into the housing (19; 119) of the working element (17; 117) and into the expansion material contained therein with simultaneous production of the insertion depth of the piston (20; 120) corresponding to the desired set travel of the valve (10), and an end region (32) of the piston (20; 120) with its inner support (36), the electric lines (22, 23; 122, 123; 222, 223; 322, 323) with terminals (24, 25; 124, 125: 224, 225; 324, 325) connected thereto by soldering, of a guided-out cable (26, 266) or of a plug receiver (152; 352) or of a plug (153, 154) including the solder points (27, 28; 127, 128; 227, 228; 327, 328) being imbedded in the plastics material (33; 133; 233; 333) with formation of the preassembled built-in component (34; 134) inserted in the receiver (35) of the valve housing (11).

2. Thermostatic valve according to claim 1, **characterised in that** the plastics material (33; 133) consists of a thermoplastic material, for example polyamide.

3. Thermostatic valve according to claim 1 or 2, **characterised by** a heat resistance of the plastics material (33; 133) to above 140°C.

4. Thermostatic valve according to any one of claims 1 to 3, **characterised in that** the electric heating device (21) is arranged in the interior of the piston (20; 120; 220; 320).

5. Thermostatic valve according to any one of claims 1 to 4, **characterised in that** the piston (20; 120; 220; 320) is designed as a cartridge (31) which is hollow inside and contains an electric heat conductor (29), from which cartridge (31) the electric lines (22, 23; 122; 123; 222, 223; 322; 323) are guided out at an end (32) on the end-face side.

6. Thermostatic valve according to any one of claims 1 to 5, **characterised in that** the electric lines (22, 23; 122, 123; 222, 223; 322, 323) of the heating device (21), the terminals (24, 25; 124, 125, 224, 225; 324, 325) and the guided-out cable (26; 226) or the plug receiver (152; 352) extend substantially axially parallel to the longitudinal central axis of the piston (20; 120; 220; 320) and away from the piston (20; 120; 220; 320).

7. Thermostatic valve according to any one of claims 1 to 6, **characterised in that** the piston (20; 120; 320) with the guided-out lines (22, 23; 122, 123; 322, 323) of its inner heating device (21) is connected to terminals (24, 25; 124, 125; 324, 325) extending in axial extension, of a guided-out cable (26) or a plug receiver (152; 352) by soldering to a unit.

8. Thermostatic valve according to any one of claims 1 to 7, **characterised in that** the built-in component (34; 134) has a portion (38) with an external thread (39) which is screwed into an internal thread (40) of the receiver (35) of the valve housing (11).

9. Thermostatic valve according to claim 8, **characterised in that** the built-in component (34; 134) has an outer tool engagement face (41), for example a hexagon.

10. Thermostatic valve according to any one of claims 7 to 9, **characterised in that** the piston (20; 120) projects through a hole (43) at the base (42) of the receiver (35) in the valve housing (11).

11. Thermostatic valve according to claim 10, **characterised in that** a seal (44), for example an 0-ring, is arranged between the built-in component (34; 134) and the base (42) of the receiver (35).

12. Thermostatic valve according to any one of claims 1 to 11, **characterised in that** approximately axially parallel, for example strip-like, inserts (45, 46) which are moulded in with the plastics material (33; 133) and preferably consist of metal, are contained inside the plastics material (33; 133).

13. Thermostatic valve according to claim 12, **characterised by** at least two inserts (45, 46) which oppose one another, for example substantially diametrically, and extend on the outside of the end region of the piston (20), of the lines (22, 23) guided out therefrom, of the soldering points (27, 28), of the terminals (24, 25) connected via the latter and of the adjoining end portion of the cable (26).

14. Thermostatic valve according to claim 13, **characterised in that** the inserts (45, 46) adjoin the end region of the piston (20).

15. Thermostatic valve according to claim 13 or 14, **characterised in that** the inserts (45, 46), on the side facing the piston (20), have projections (47, 48), for example toothlike points, which engage in the material of the piston (20).

16. Thermostatic valve according to any one of claims 1 to 15, **characterised in that** the piston (20) with its end-side end face (32) is supported on a support disc (37), preferably made of metal, which is held on the inserts (45, 46).

17. Thermostatic valve according to claim 16, **characterised in that** the inserts (45, 46) contain a recess of (49, 50) open to the inside, in which the support disc (37) rests.

18. Thermostatic valve according to any one of claims 6 to 17, **characterised in that** an insertion part (51) which separates the lines (22, 23), the soldering points (27, 28) and the terminals (24, 25) and spaces them from one another transversely is contained in the plastics material (33) in the central region between the electric lines (22, 23) of the piston (20), the soldering points (27, 28) and the terminals (24, 25) of the cable (26) or the cable receiver (152).

19. Thermostatic valve according to any one of claims 1 to 18, **characterised in that** the plug receiver (152; 352) is moulded from plastics material (133; 333), into which the plug pins (153, 154; 353, 354) are moulded.

20. Thermostatic valve according to any one of claims 1 to 7, **characterised in that** the piston (220; 320) is inserted into a hole (255) in the valve housing (211) and is axially supported thereon by one end (232).

21. Thermostatic valve according to claim 20, **characterised in that** the lines (222, 223; 322, 323) guided out of the piston (220; 320) are guided through a duct (258) in the valve housing (211) to a receiver (235) into which a plastic housing (259; 359) which is in two parts at least on a part of its axial extension and is preferably hinge-mountable can be inserted from above, and into which plastic housing (259; 359) the lines (222, 223; 322, 323) are guided.

22. Thermostatic valve according to claim 21, **characterised in that** the plastic housing (259) serves as a central holding device and guide for an end portion of a cable (226), the terminals of which (224, 225) inside the plastic housing (259) are connected to the lines (222, 223) of the piston (220) by soldering.

23. Thermostatic valve according to claim 22, **characterised in that** the terminals (224, 225) of the cable (226) are guided up from the cable end in the counter direction to the course of the cable and the terminals (224, 225) which have been guided up extend substantially parallel to a line (222, 223) of the piston (220) and the two are soldered by their upper, adjacent end.

24. Thermostatic valve according to any one of claims 20 to 23, **characterised in that** the region between the connection of the lines (222, 223; 322, 323) of the piston (220; 320) and the terminals (224, 225; 324, 325), on the one hand, and the plastic housing (259; 359), on the other hand, is filled with plastics material (233; 333), for example, polyamide.

25. Thermostatic valve according to claim 20 or 21, **characterised in that** a plug receiver (352) is connected to the plastic housing (359) and, in the interior of the plastic housing (359), the lines (322, 323) of the piston 320, on the one hand, and the terminals (324, 325) of the plug receiver (352), on the other hand, are flush with one another and connected by soldering, the interior of the plastic housing (359) being filled with plastics material (333), for example polyamide.

26. Thermostatic valve according to claim 24. or 25, **characterised in that** the plastics material (233; 333) is injected.

27. Thermostatic valve according to any one of claims 21 to 26, **characterised in that** the plastic housing (259; 359) contains apertures (262) in its wall extending to the outside, which are filled with plastics material (233; 333) which is in contact with the wall surface of the receiver (235) of the valve housing (211) in the region of the apertures (262).

28. Thermostatic valve according to any one of claims 21 to 27, **characterised in that** the plastic housing (259; 359) is held with a preferably cylindrical part (261) rigidly in the receiver (235), for example by means of a thread, clamping or the like.

29. Thermostatic valve according to any one of claims 21 to 28, **characterised in that** the receiver (235) has rough points on the wall surface, for example is roughened.

## Revendications

1. Vanne thermostatique contenant dans un carter (11), un élément de travail (17) en forme de pièce en matière extensible, présentant un carter (19) avec, dans le carter de vanne (11), un corps de vanne (16) pour la commande d'un siège de vanne (12) lui étant assujetti et avec, à l'intérieur, la matière extensible ainsi qu'un piston (20) immergé dans celle-ci, prenant appui sur le carter (11) de la vanne, le carter (19) pouvant coulisser par rapport au piston (20), par suite de l'augmentation de volume de la matière extensible, du fait de son échauffement, et qui comporte à l'intérieur, pour son réchauffage, un dispositif de chauffage électrique (21), **caractérisée en ce que**,
une pièce incorporée (34, 134) en matériau plastique (33 ; 133 ; 233 ; 333) approximativement coaxiale à l'élément de travail (17 ; 117), comportant un support intérieur (36) pour le piston (20 ; 120) pénétrant par sa dimension axiale réglable, dans un logement (35) du carter de la vanne (11) et fixé à l'intérieur de celui-ci, le piston (20 ; 120) étant incorporé dans le carter (19 ; 119) de l'élément de travail (17 ; 117) et dans la matière extensible contenu dans celui-ci avec réglage simultané de la profondeur de plongée du piston (20; 120) en fonction de la course de consigne souhaitée pour la vanne (10) et où une zone (32) d'extrémité du piston (20; 120) avec son appui intérieur (36), le câblage électrique interne (22,23; 122,123; 222,223: 322,323) avec les branchements électriques (24,25; 124,125; 224.225; 324,325) d'un câble (26; 226) sortant ou d'une prise de courant mâle(152: 352) ou femelle (153,154) y compris les joints de brasure (27.28; 127.128; 227,228; 327,328) sont noyés dans la matière plastique (33; 133; 233; 333) avec formation de la pièce prête à incorporer (34; 134), dans le logement (35) du carter de la vanne (11) .

2. Vanne thermostatique selon la revendication 1,
**Caractérisée en ce que**,
la matière plastique est constituée d'un matériau thermoplastique, par exemple, un polyamide.

3. Vanne thermostatique selon la revendication 1 ou 2 **Caractérisée par**
une stabilité de la matière plastique (33; 133) jusqu'au delà de 140°C.

4. Vanne thermostatique selon l'une des revendications 1 à 3.
**Caractérisée en ce que**,
le dispositif de chauffage électrique (21) est disposé à l'intérieur du piston (20 ; 120 ; 220 ; 320).

5. Vanne thermostatique selon l'une des revendications 1 à 4, **Caractérisée en ce que**,
le piston (20; 120; 220; 320) est constitué comme une cartouche (31) creuse intérieurement, contenant un élément chauffant électrique (29), à partir de laquelle sur l'une de ses extrémités frontale (32) sortent les conducteurs électriques (22,23; 122,123; 222,223; 322,323).

6. Vanne thermostatique selon l'une des revendications 1 à 5, **Caractérisée en ce que**,
les conducteurs électriques (22,23; 122,123; 222,223 ; 322, 323) du dispositif de chauffage (21), les branchements. (24, 25; 124,125; 224,225; 324,325) ainsi que le câble (26,226) sortant et/ou la prise femelle (152; 352) cheminent parallèlement à l'axe longitudinal du piston (20; 120 ; 220 ; 320) et en s'éloignant de ce piston (20; 120 ; 220 ; 320).

7. , Vanne thermostatique selon l'une des revendications 1 à 6, **Caractérisée en ce que**,
le piston (20 ; 120 ; 320) est relié par brasage en une seule unité, par l'intermédiaire des conducteurs sortants (22.23; 122;123; 222,223 ; 322,323) de son dispositif de chauffage intérieur (21), aux conducteurs cheminant dans le prolongement axial (24,25; 124,125; 224.225; 324,325) d'un câble sortant (26) et/ou d'une prise femelle (152 ; 352).

8. Vanne thermostatique selon l'une des revendications 1 à 7, **Caractérisée en ce que**,
la pièce incorporée (34, 134) présente une section (38) comportant un filetage extérieur (39) vissé dans un filetage intérieur (40) du logement (35) du carter de la vanne (11).

9. Vanne thermostatique selon l'une des revendications 8,. **Caractérisée en ce que**,
la pièce incorporée (34 ; 134) présente une surface pour une prise extérieure d'un outil (41), par exemple, hexagonale.

10. Vanne thermostatique selon l'une des revendications 7 à 9, **Caractérisée en ce que**,
le piston (20; 120) dépasse vers l'intérieur par un perçage (43) situé au fond (42) du logement (35) du carter de la vanne (11).

11. Vanne thermostatique selon la revendication 10, **Caractérisée en ce que**,
entre la pièce servant au montage (34 ; 134) et le fond (42) du logement (35) est installé un joint (44), par exemple un joint torique.

12. Vanne thermostatique selon l'une des revendications 1 à 11, **Caractérisée en ce que**,
à l'intérieur de la matière plastique (33 ; 133), sont contenues des pièces d'insertion (45 ; 46), par exemple, striées, approximativement parallèles à l'axe, moulées dans la matière plastique (33 ; 133), et de préférence, en métal.

13. Vanne thermostatique selon la revendication 12,. **Caractérisée en ce que**,
au moins deux pièces d'insertion (45, 46), disposées par exemple, diamétralement opposées l'une par rapport à l'autre, montées sur la face extérieure de la partie terminale du piston (20), des câbles (22,23) sortant de celui-ci, des joints de brasage (27,28), des raccordements (24,25) fixés au dessus de ceux-ci et de la section terminale du câble (26) qui lui sont raccordées.

14. Vanne thermostatique selon la revendication 13, **Caractérisée en ce que**, les pièces d'insertion (45,46) s'appuient sur la partie terminale du piston (20).

15. Vanne thermostatique selon la revendication 13 ou 14, **Caractérisée en ce que**,
Les pièces d'insertion (45,46) s'emboîtent dans les parties en saillie (47,48) de la face tournée vers le piston (20), lesquelles comportent par exemple des pointes en forme de dents, qui s'emboîtent dans la matière du piston (20).

16. Vanne thermostatique selon l'une des revendications 1 à 15, **Caractérisée en ce que**,
le piston (20) s'appuie, sur sa face frontale (32), sur une rondelle (37), de préférence métallique, maintenue au niveau des pièces d'insertion (45,46).

17. Vanne thermostatique selon la revendications 16,. **Caractérisée en ce que**,
les pièces d'insertion (45 ; 46) comportent une cavité (49, 50), ouverte vers l'intérieur dans laquelle est disposée la rondelle d'appui (37) .

18. Vanne thermostatique selon l'une des revendications 6 à17, **Caractérisée en ce que**,
Dans la matière plastique (33) au centre de la zone entre les conducteurs électriques (22,23) du piston (20), , des joints de brasage (27,28), des raccordements (24, 25), fixés au dessus de ceux-ci et de la section terminale du câble (26), et/ou de la prise femelle (152) est disposée une pièce d'écartement (51), qui maintient séparés les conducteurs électriques (22,23), les joints de brasage (27,28), et les raccordements (24,25), et maintient également leur distance transversale.

19. Vanne thermostatique selon l'une des revendications 1 à 8, **Caractérisée en ce que**,
La prise femelle (152 ; 352) est en matière plastique (133 ; 333) ,dans laquelle sont moulés les tiges de la prise (153,154 ; 353,354).

20. Vanne thermostatique selon l'une des revendications 1 à 7, **Caractérisée en ce que**,
Le piston (220 ; 320) est introduit dans un orifice (255) du carter de la vanne (211) et s'appuie en direction axiale sur sur l'une des extrémités de celui-ci.

21. Vanne thermostatique selon la revendications 20, **Caractérisée en ce que**,
les conducteurs (222,223 ; 322,323) sortant du piston (220 ; 320) sont conduits à travers un canal (258) du carter de la vanne (211), dans un logement (235) dans lequel peut être introduit, au moins sur une partie de sa longueur axiale, un capot en deux parties, préférablement pivotant (259 ; 359).

22. Vanne thermostatique selon la revendications 21,. **Caractérisée en ce que**,
le capot en plastique (259) sert de support central et de guidage à une extrémité de câble (226) dont les extrémités des conducteurs (224,225) à l'intérieur du carter (229) sont reliées par brasage aux conducteurs (222 ,223) du piston (220).

23. Vanne thermostatique selon la revendications 22,. **Caractérisée en ce que**,
les conducteurs (224,225)du câble (226) sont remontés depuis l'extrémité de ce câble, en direction opposée, et les raccords (224,225) se dirigent pratiquement parallèlement à l'un des conducteurs (222,223) du piston (220) et ils sont, brasés à leur extrémité supérieure, respectivement, à leur extrémité voisine

24. Vanne thermostatique selon l'une des revendications 20 à 23,
**Caractérisée en ce que**,
La zone comprise entre la liaison entre les conducteurs (222, 223 ; 322,323) du piston (220 ; 320) et les raccords (224, 225 ; 324,325), d'une part, et par rapport au capot en plastique (259 ; 359) avec une matière plastique (233 ; 333) telle que du polyamide. sont remplis d'une matière plastique.

25. Vanne thermostatique selon la revendication 20 ou 21. **Caractérisée en ce que**,
Sur le capot plastique (359) est montée une prise de courant (352) et à l'intérieur de ce capot plastique (359),les conducteurs (322,323) du piston (320), d'une part, et les raccords (324,325) de la prise de courant (352), d'autre part, se superposent et sont reliés ensemble par brasage, l'intérieur du capot plastique (359) étant rempli d'une matière plastique (333), telle que du polyamide.

26. vanne thermostatique selon la revendication 24 ou 25, **Caractérisée en ce que**,
La matière plastique (233 ; 333) est injectée.

27. Vanne thermostatique selon l'une des revendications 21 à 26,
**Caractérisée en ce que**,
Le carter en plastique (259 ; 359) comporte dans sa paroi, jusqu'à sa face extérieure, des perçages (262) remplis de matière plastique (233 ; 333) venant en contact mobile avec la surface externe du logement (235) du carter de la vanne (211).

28. Vanne thermostatique selon l'une des revendications 21 à 27,
**Caractérisée en ce que**,
Lc capot en matière plastique (259 ; 359) est fixé dans le logement, au moyen d'une pièce (261), de préférence cylindrique, par exemple par filetage, serrage

29. Vanne thermostatique selon l'une des revendications 21 à 28,
**Caractérisée en ce que**,
Le logement (235) présente sur sa surface extérieure, des rugosités, et il peut être, en particulier, rendu rugueux.
